# EUROPÄISCHE PATENTSCHRIFT

(11) **EP 2 903 184 B1**
(45) Veröffentlichungstag und Bekanntmachung des Hinweises auf die Patenterteilung: **14.03.2018**
(21) Anmeldenummer: 14153531.0
(22) Anmeldetag: 31.01.2014
(51) Int. Cl.: H04B 10/29, H04B 10/299, H04B 10/64, H04J 14/02

(54) **Wellenlängenumsetzer und Verfahren zur Wellenlängenumsetzung**
Wavelength converter and method for wavelength conversion
Convertisseur de longueur d'onde et procédé de conversion de longueur d'onde

(43) Veröffentlichungstag der Anmeldung: 05.08.2015
(73) Patentinhaber: Deutsche Telekom AG, 53113 Bonn (DE)
(72) Erfinder: Röse, Josef, 64289 Darmstadt (DE); Dr. Mattheus, Arnold, 63128 Dietzenbach (DE); Weiershausen, Werner, 64859 Eppertshausen (DE)
(74) Vertreter: Blumbach · Zinngrebe Patent- und Rechtsanwälte

(56) Entgegenhaltungen:
- WO-A1-2011/083165
- WO-A1-2014/012592
- US-A1- 2012 177 386

## Beschreibung

Die Erfindung betrifft allgemein die Datenübertragung mittels optischer Signale, und insbesondere einen Wellenlängenumsetzer und ein Verfahren zur Wellenlängenumsetzung zum Einsatz in einem im Wellenlängen-Multiplexbetrieb betriebenen optischen Übertragungsnetz.

Viele Kommunikationsnetze basieren heute auf optischer Signalübertragung, wobei zur besseren Ausnutzung der Bandbreite von Glasfasern Wellenlängenmultiplex (WDM; Wavelength Division Multiplexing) eingesetzt wird. Bei Wellenlängenmultiplex wird Licht von Lasern unterschiedlicher Wellenlänge mittels eines optischen Multiplexers zusammengeführt, über eine gemeinsame optische Faser geleitet und empfangsseitig mittels eines optischen Demultiplexers wieder getrennt.

Optische WDM-Übertragungssysteme umfassen in der Regel ein Übertragungsnetz mit einer Mehrzahl von Netzknoten, welche optisch leitend miteinander verbunden sind. Benachbarte Netzknoten sind dabei typischerweise physikalisch mittels eines Lichtwellenleiters (LWL) miteinander verbunden.

In einem optisch transparenten WDM-Netz, auch als All Optical Network (AON) bezeichnet, welches ausschließlich auf optischen Komponenten basiert, werden die Wellenlängen zum Routen durch das Netz verwendet und die Übertragung erfolgt vollständig in der optischen Ebene.

Optische Netze entwickeln sich von einfachen Punkt-zu-Punkt-Systemen zu vermaschten Netzen, in denen rekonfigurierbare optische Add/Drop Multiplexer (ROADM) optische Kanäle (engl. OCh) schalten, von einer Leitungsschnittstelle zu einer anderen, oder von einer Leitungsschnittstelle zu einem Add/Drop-Port oder umgekehrt. Mittenfrequenz, Modulationsformat und optische Bandbreite des jeweiligen optischen Kanals wird von der Quelle des optischen Kanals bestimmt. Netzelemente (NE) und Glasfasern zwischen Quelle und Senke des optischen Kanals, über die ein optischer Kanal geführt wird, verschlechtern das optische Signal, verändern aber in einem optisch transparenten Netz nicht die zuvor genannten Eigenschaften des optischen Kanals, d.h. die Mittenfrequenz ist auf allen Kanten entlang des optischen Pfades unverändert. Die Unmöglichkeit, die Mittenfrequenz zu ändern, führt zu Blockierungen im Netz, d.h. nur ein Teil der Kanäle kann auf einer Kante genutzt werden. Fortgeschrittene Modulationsformate und elektronische Dispersionskompensation ermöglichen eine große transparente Länge und/oder den Einsatz vieler ROADM entlang des optischen Pfades, wodurch sich die Blockierungswahrscheinlichkeit zusätzlich erhöht.

In WO 2011/083165 A1 wird ein Netzelement für optische Signale beschrieben, die eine Mehrzahl unterschiedlicher Kanäle mit jeweils einer zugeordneten Frequenz bzw. Wellenlänge enthalten, wobei das Eingangssignal in ein Ausgangssignal überführt wird, und wobei die Nutzdaten von zumindest einem Kanal zumindest teilweise manipuliert werden. Das in WO 2011/083165 A1 beschriebene Netzelement kann einen rekonfigurierbaren, optischen Add-Drop-Multiplexer enthalten, welcher einen Datenstrom aus dem Eingangssignal entfernt und/oder hinzufügt und/oder ändert, und kann ferner ein optisches Signal regenerieren, um die abnehmende Signalqualität aufgrund der Dispersion der das Signal tragenden Faser zu kompensieren, wobei anstelle eines optischen Schalters ein optischer Koppler eingesetzt wird, welcher einen vorgebbaren Anteil des Eingangssignals auskoppelt, wobei das ausgekoppelte Signal in ein elektrisches Signal gewandelt, mittels einer Signalverarbeitungseinrichtung verarbeitet, mittels eines optischen Senders wieder in ein optisches Signal gewandelt und mittels eines zweiten Kopplers wieder dem Ausgangssignal zugeführt wird.

In US 2012/177386 A1 wird ferner ein Verfahren und ein System zur Kompensation von Signalbeeinträchtigungen in einem Kommunikationssystem beschrieben, wobei ein elektronisches Phasenkonjugations-System ein optisches Signal von einem ersten Abschnitt einer faseroptischen Verbindung empfängt, das ankommende optische Signal in ein elektrisches Inphase-Signal und ein elektrisches Quadratur-Signal umwandelt und daraus ein phasenkonjugiertes optisches Ausgangssignal erzeugt, wobei das phasenkonjugierte optische Ausgangssignal die Faserbeeinträchtigung im Kommunikationssystem kompensiert.

Das Problem der Wellenlängenblockierungen kann mit Hilfe von Wellenlängenkonvertern gelöst werden, wobei die Konvertierung mit rein optischen Techniken oder mittels einer OEO-Konvertierung (OEO: optisch-elektrisch-optisch) erfolgen kann. Rein optische Methoden wie zum Beispiel die Vier-Wellenmischung bedingen eine Reihe technischer Nachteile und werden deshalb in der Regel nicht genutzt. Für amplitudenmodulierte optische Signale sind sogenannte 2R-Regeneratoren in Kombination mit Wellenlängenumsetzern bekannt aus "Optical 2R and 3R Signal Regeneration in Combination with Dynamic Wavelenght Switching Using a Monolithically INtegrated, Widely Tunable Photocurrent Driven Wavelenght Converter" von M. N. Sysak et al., European Conference on Optical Communications, 2006 (s. http://optoelectronics.ece.ucsb.edu/sites/default/files/pub lications/Sysak06ecoc.pdf). Allerdings sind diese 2R-Regeneratoren auf Amplitudenmodulation beschränkt und sind nicht für fortgeschrittene Modulationsformate einsetzbar, bei denen insbesondere die optische Phase zur Kodierung des Bitstroms verwendet wird.

Aus WO 2014/012592 A1 ist eine elektro-optische Implementierung eines optischen Spektrumswandlers bekannt, welcher einen Überlagerungs-Empfänger mit einem Polarisationsteiler umfasst, wobei jedes Polarisationssignal mit dem Signal eines lokalen Oszillators kombiniert und einem Photodetektor zugeführt wird, und wobei das elektrische Signal mit einem Verstärker verstärkt und einem optischen Modulator zugeführt wird. Heute wird die Umsetzung von Wellenlängen mittels OEO-Konvertern in Form von 3R-Regeneratoren ausgeführt, die im Wesentlichen Anordnungen von zwei Rücken-an-Rücken geschalteten opto-elektrischen Sendeempfängern sind. 3R-Regeneratoren haben die Fähigkeit, die Mittenfrequenz, das Modulationsformat und weitere Eigenschaften eines optischen Kanals zu ändern.

In 3R-Regeneratoren werden prinzipiell zwei Arten von Empfängern, Direktempfänger und Überlagerungsempfänger, eingesetzt. 3R-Regeneratoren mit Direktempfängern wenden die Grundprozesse der opto-elektrischen Wandlung, der Takt- und Datenregeneration, der Rahmensynchronisation und der FEC-Dekodierung auf der Empfangsseite und der FEC-Kodierung und ektro-optischen Wandlung auf der Sendeseite an.

3R-Regeneratoren mit Überlagerungsempfänger wenden die Grundprozesse der opto-elektrischen Wandlung, der Analog-Digital-Wandlung, der elektronischen Dispersionskompensation, der Takt- und Datenregeneration, der Rahmensynchronisation und der FEC Dekodierung auf der Empfangsseite und der FEC-Kodierung, der Digital-Analog-Wandlung und der ektro-optischen Wandlung auf der Sendeseite an.

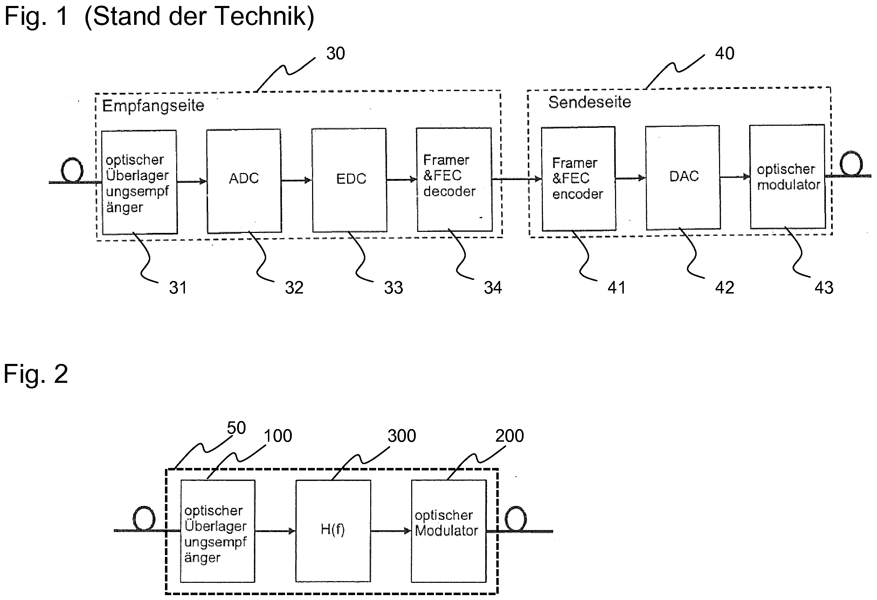

Ein Blockdiagramm eines solchen 3R-Regenerators mit Überlagerungsempfänger ist exemplarisch in Fig. 1 dargestellt. Die elektrischen Prozesse eines solchen 3R-Regenerators von der Analog-Digital-Wandlung bis zur Digital-Analog-Wandlung enthalten viele Schaltkreise, sind komplex in der Entwicklung und Produktion, werden (z.B. bei der FEC) in ganz unterschiedlichen, häufig inkompatiblen Varianten realisiert, und tragen am stärksten zum Leistungsverbrauch bei. 3R-Regeneratoren verbrauchen insbesondere eine um mehrere Größenordnungen höhere Leistung als für das optische Schalten eines optischen Kanals benötigt wird. Ein 9-degree ROADM verbraucht zum Beispiel eine Leistung von ungefähr 1 kW, während ein 100 Gbit/s-3R-Regenerator mit Überlagerungsempfänger ungefähr 150 W bis 200 W verbraucht.

Es ist daher nachteilig, eine Wellenlängenumsetzung mittels 3R-Regeneratoren durchzuführen, d.h. eine Umsetzung der Mittenfrequenz eines Übertragungskanals von einer empfangsseitigen Frequenz f_{R} zu einer sendeseitigen Frequenz f_{T}, weil der Leistungsverbrauch bereits weniger 3R-Regeneratoren die eines ROADMs übersteigt.

Es ist daher die Aufgabe der vorliegenden Erfindung, einen Weg aufzuzeigen, wie eine Wellenlängenumsetzung in einem optischen WDM-Netz auf einfachere und/oder effizientere Weise erfolgen kann, und insbesondere einen Wellenlängenkonverter mit geringerem Leistungsverbrauch und mit weniger Komponenten anzugeben.

Diese Aufgabe wird durch die Merkmale der unabhängigen Ansprüche gelöst. Vorteilhafte Ausführungsformen sind Gegenstand der abhängigen Ansprüche.

Ein erfindungsgemäßer Wellenlängenumsetzer für I/Qquadratur-modulierte optische Signale umfasst dementsprechend einen optischen Überlagerungsempfänger, eine Einrichtung zur Signalanpassung und einen optischen Modulator.

Im Gegensatz zu dem oben zitierten Stand der Technik ist ein erfindungsgemäßer Wellenlängenumsetzer für beliebige Quadraturamplitudenmodulation (QAM) einschließlich Phase Shift Keying (PSK) im Konstellationsdiagramm einsetzbar.

Der Wellenlängenumsetzer umfasst einen Überlagerungsempfänger zum Zurückgewinnen elektrischer I- und Q-Signale aus einem an einem optischen Eingang des Überlagerungsempfängers anliegenden I/Q-quadraturmodulierten optischen Eingangssignal mit einer Eingangs-Mittenfrequenz, welcher jeweils einen elektrischen Ausgang für jedes der zurückgewonnenen I- und Q-Signale umfasst. Ferner umfasst der Wellenlängenumsetzer einen optischen Modulator zum Erzeugen eines I/Qquadraturmodulierten optischen Ausgangssignals mit einer vorgebbaren Ausgangs-Mittenfrequenz aus elektrischen I- und Q-Signalen, welche an jeweiligen elektrischen Eingängen des optischen Modulators anliegen. Die elektrischen Ausgänge des Überlagerungsempfängers sind mit den elektrischen Eingängen des optischen Modulators verbunden, wobei die elektrischen Signale zur Weiterverarbeitung durch den optischen Modulator angepasst werden. Zu diesem Zweck sind die elektrischen Ausgänge des Überlagerungsempfängers über eine Einrichtung zur Signalanpassung mit zugeordneten elektrischen Eingängen des optischen Modulators verbunden. Die Einrichtung zur Signalanpassung ist vorzugsweise aus linearen elektrischen Vierpolen gebildet, die jeweils die gleiche Übertragungsfunktion H(f) aufweisen. Jede elektrische Schnittstelle der Einrichtung zur Signalanpassung ist vorzugsweise symmetrisch ausgebildet und hat typischer Weise eine Impedanz von 50 Ohm.

Ein I/Q-quadraturmoduliertes optisches Signal wird erzeugt, indem ein zu übertragendes serielles Signal in zwei parallele Signale, als I- und Q-Signal bezeichnet, zerlegt wird. Ein optisches Trägersignal wird mit dem I-Signal (Inphase) moduliert und parallel wird das Trägersignal, um 90° phasenverschoben, mit dem Q-Signal (Quadratur) moduliert und die so erzeugten Signale zum Sendesignal addiert. Es erfolgt somit eine Aufteilung in zwei Datenkanäle, wobei die beiden Kanäle in Quadratur zueinander stehen, d.h. sie sind orthogonal, wodurch ermöglicht wird, empfängerseitig I- und Q-Signal wieder zu trennen. Die beiden Basisbandsignale I und Q können unabhängig oder voneinander abhängig gewählt werden, so dass sich im Wesentlichen alle linearen und nichtlinearen Modulationsformen realisieren lassen.

In optischen WDM-Übertragungsnetzen werden in der Regel I/Q-quadraturmodulierte optische Signale übertragen, wobei für jeden WDM-Kanal eine individuelle Trägerfrequenz vorgesehen ist, die der Mittenfrequenz des WDM-Kanals entspricht. Üblicherweise verwendete Mittenfrequenzen für WDM-Kanäle werden beispielsweise im ITU-T Standard G.694.1 für unterschiedliche feste Wellenlängenraster definiert, beispielsweise mit einem festen Abstand von 100 GHz oder 50 GHz zwischen den Mittenfrequenzen benachbarter WDM-Kanäle. Der Wellenlängenumsetzer wird insbesondere in einem Netzknoten zur Umsetzung der Wellenlänge, d.h. der Mittenfrequenz, eines einzelnen WDM-Kanals, der in einem im Netzknoten empfangenen optischen Multiplexsignal enthalten ist, eingesetzt, wobei das optische Multiplexsignal zunächst mittels eines Demultiplexers in einzelne optische WDM-Kanäle aufgeteilt und das optische Signal eines ausgewählten optischen WDM-Kanals dem Wellenlängenumsetzer zugeführt wird, um dieses in eine andere Wellenlänge umzusetzen. Eingangs- und Ausgangs-Mittenfrequenz sind somit typischerweise unterschiedlich. Eine Wellenlängenumsetzung erfolgt insbesondere dann, wenn die Mittenfrequenz des ausgewählten WDM-Kanals auf der optischen Verbindungsstrecke zu einem benachbarten Netzknoten, zu dem die Signale des ausgewählten WDM-Kanals weitergeleitet werden sollen, bereits durch einen anderen WDM-Kanal belegt ist, wenigstens eine andere nutzbare Mittenfrequenz hingegen auf dieser Verbindungsstrecke aktuell nicht genutzt wird. Es erfolgt dann mittels des Wellenlängenumsetzers eine Umsetzung der Mittenfrequenz des ausgewählten WDM-Kanals auf diese bislang ungenutzte Mittenfrequenz, wodurch eine sonst auftretende Wellenlängenblockierung vermieden wird.

Die Erfinder haben erkannt, dass eine Wellenlängenumsetzung eines WDM-Kanals mit optischen Signalen im gesamten Konstellationsdiagramm, insbesondere mit allen gängigen optischen QAM-Signalen, einschließlich PSK, statt mit Hilfe eines 3R-Regenerators auch mittels einer demgegenüber deutlich vereinfachten Anordnung von optischem Überlagerungsempfänger, optischem IQ-Modulator und linearen elektrischen Vierpolen zur Verbindung von Empfänger und Modulator realisierbar ist. Solch eine Anordnung spart ungefähr 90 % der Leistung, die bei Verwendung eines 3R-Regenrators erforderlich wäre, da auf verschiedene elektronische Komponenten mit hohem Leistungsverbrauch verzichtet werden kann, und ermöglicht somit eine sehr energieeffiziente Wellenlängenumsetzung, die zudem mit geringerem Herstellungsaufwand als bei 3R-Regeneratoren verbunden ist.

Die aus linearen elektrischen Vierpolen gebildete Einrichtung zur Signalanpassung umfasst vorteilhaft jeweils einen linearen elektrischen Vierpol für das I-Signal und für das Q-Signal. Im einfachsten Fall ist die Einrichtung zur Signalanpassung aus zwei linearen elektrischen Vierpolen gebildet, welche jeweils einen symmetrischen eingangsseitigen und einen symmetrischen ausgangsseitigen Anschluss aufweisen, wobei der Überlagerungsempfänger zwei symmetrische elektrische Ausgänge, jeweils einen für das zurückgewonnene I- und Q-Signal, umfasst, die jeweils mit einem eingangsseitigen symmetrischen Anschluss eines der Vierpole verbunden sind, und wobei der optische Modulator zwei symmetrische elektrische Eingänge, jeweils einen für ein angepasstes I- und Q-Signal, umfasst, die jeweils mit einem ausgangsseitigen Anschluss eines der Vierpole verbunden sind.

Zur Wellenlängenumsetzung optischer Signale, welche zwei orthogonale Polarisationszustände umfassen, weist der Überlagerungsempfänger des Wellenlängenumsetzers einen polarisierenden Strahlteiler zum Aufteilen des am optischen Eingang anliegenden optischen Eingangssignals in zwei zueinander orthogonal polarisierte optische Signale auf, wobei der Überlagerungsempfänger dazu ausgebildet ist, aus jedem der zwei polarisierten optischen Signale jeweils ein I- und Q-Signal zurückzugewinnen und an individuellen elektrischen Ausgängen bereitzustellen. In dieser Ausführungsform umfasst der optische Modulator einen Polarisations-Multiplexer und ist dazu ausgebildet, zwei I/Q-quadraturmodulierte optische Signale mit der Ausgangs-Mittenfrequenz aus jeweils zugeordneten elektrischen I- und Q-Signalen zu erzeugen und mittels des Polarisations-Multiplexers zum optischen Ausgangssignal zu kombinieren, wobei das optische Ausgangssignal zwei orthogonale Polarisationszustände umfasst.

Der Wellenlängenumsetzer umfasst in dieser Ausführungsform somit zwei separate Signalwege für die jeweiligen Polarisationen. Vorzugsweise umfasst die Einrichtung zur Signalanpassung in dieser Ausführungsform vier lineare elektrische Vierpole, von denen je zwei in einem der zwei separaten Signalwege angeordnet sind.

Die Einrichtung zur Signalanpassung umfasst vorteilhaft in jedem Vierpol jeweils wenigstens eine Einrichtung zur Änderung der Amplitude des eingangsseitig zugeführten I-bzw. Q-Signals, wenigstens einen Rauschfilter, und/oder eine Einrichtung zur linearen Änderung der Phasenbeziehung der spektralen Anteile des I- bzw. Q-Signals.

Zur Änderung der Amplitude kann die Einrichtung zur Signalanpassung insbesondere eine Einrichtung zur Signalverstärkung umfassen. In den jeweiligen Vierpolen angeordnete Einrichtungen zur linearen Änderung der Phasenbeziehung der spektralen Anteile der I- und Q-Signale können insbesondere vorteilhaft dazu dienen, die Funktion einer elektronischen Dispersionskompensation zu unterstützen.

Der Überlagerungsempfänger des Wellenlängenumsetzers umfasst vorzugsweise einen Lokaloszillator zur Erzeugung eines optischen Signals einer vorbestimmten Frequenz. Das vom Überlagerungsempfänger empfangene optische Signal wird in zwei optische Signale aufgeteilt, von denen eines mit dem vom Lokaloszillator erzeugten optischen Signal überlagert wird, um aus dem optischen Überlagerungssignal mittels einer Detektordiode das I-Signal zu erzeugen, und eines mit dem vom Lokaloszillator erzeugten und um 90° phasenverschobenen optischen Signal überlagert wird, um aus diesem zweiten optischen Überlagerungssignal mittels einer zweiten Detektordiode das Q-Signal zu erzeugen.

Der Lokaloszillator des Überlagerungsempfängers kann eine Frequenz aufweisen, die der Eingangs-Mittenfrequenz entspricht, so dass die I- und Q-Signale als Basisbandsignale zurückgewonnen werden, oder eine Frequenz oberhalb oder unterhalb der Eingangs-Mittenfrequenz aufweisen, so dass die I- und Q-Signale an den jeweiligen Ausgängen des Überlagerungsempfängers als Zwischenfrequenz-Signale bereitgestellt werden.

Auf diese Weise kann der Lokaloszillators des Überlagerungsempfängers eine einstellbare Frequenz aufweisen, die an die jeweilige Eingangs-Mittenfrequenz angepasst werden kann. Alternativ kann der Wellenlängenumsetzer mit einer festen Frequenz des Lokaloszillators des Überlagerungsempfängers für verschiedene Eingangs-Mittenfrequenzen eingesetzt werden.

Ein erfindungsgemäßes Verfahren zur Wellenlängenumsetzung umfasst das Empfangen eines I/Q-quadraturmodulierten optischen Eingangssignals mit einer Eingangs-Mittenfrequenz und Zurückgewinnen elektrischer I- und Q-Signale aus dem empfangnen optischen Signal mittels eines Überlagerungsempfängers, das Durchführen einer Signalanpassung der zurückgewonnenen elektrischen I- und Q-Signale und Zuführen der angepassten I- und Q-Signale einem optischen Modulator, und das Erzeugen eines I/Qquadraturmodulierten optischen Ausgangssignals mit einer vorgegebenen Ausgangs-Mittenfrequenz durch den optischen Modulator aus den zugeführten angepassten elektrischen I- und Q-Signalen.

Die Signalanpassung erfolgt im einfachsten Fall mittels zweier linearer elektrischer Vierpole mit jeweils der gleichen Übertragungsfunktion H(f).

Zur Wellenlängenumsetzung optischer Signale, welche zwei orthogonale Polarisationszustände umfassen umfasst das Zurückgewinnen elektrischer I- und Q-Signale vorteilhaft ein Aufteilen des empfangenen optischen Eingangssignals in zwei zueinander orthogonal polarisierte optische Signale und Zurückgewinnen jeweils eines I- und Q-Signals aus jedem der zwei polarisierten optischen Signale, und das Erzeugen des I/Q-quadraturmodulierten optischen Ausgangssignals umfasst vorteilhaft das Erzeugen zweier I/Qquadraturmodulierter optischer Signale mit der Ausgangs-Mittenfrequenz aus jeweils zugeordneten elektrischen I- und Q-Signalen und Kombinieren der zwei erzeugten optischen Signale zum optischen Ausgangssignal mittels eines Polarisations-Multiplexers, wobei das optische Ausgangssignal zwei orthogonale Polarisationszustände umfasst.

In dieser Ausführungsform des Verfahrens erfolgt die Signalanpassung vorzugsweise mittels vier linearen elektrischen Vierpolen, die die gleiche Übertragungsfunktion H(f) aufweisen. Das Durchführen der Signalanpassung der zurückgewonnenen elektrischen I- und Q-Signale umfasst vorteilhaft eine Änderung der Amplitude der zurückgewonnenen elektrischen I- und Q-Signale, ein Filtern von Rauschen in den zurückgewonnenen elektrischen I- und Q-Signalen, und/oder eine lineare Änderung der Phasenbeziehung der spektralen Anteile der zurückgewonnenen elektrischen I- und Q-Signale.

Die Ausgangs-Mittenfrequenz wird vorzugsweise in Abhängigkeit einer Belegung von Wellenlängenkanälen wenigstens einer optischen Übertragungsstrecke eines im Wellenlängen-Multiplexbetrieb betriebenen optischen Übertragungsnetzes ausgewählt.

Es liegt auch ein Netzelement zum Einsatz in einem im Wellenlängen-Multiplexbetrieb betriebenen optischen Übertragungsnetz im Rahmen der Erfindung, welches wenigstens einen Wellenlängenkonverter wie oben beschrieben umfasst.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile. Es zeigen:
- Fig. 1: eine schematische Darstellung eines aus dem Stand der Technik bekannten 3R-Regenerators zur Wellenlängenumsetzung in einem WDM-Netz,
- Fig. 2: eine schematische Darstellung des prinzipiellen Aufbaus eines erfindungsgemäßen Wellenlängenumsetzers,
- Fig. 3: eine schematische Darstellung einer bevorzugten Ausführungsform eines erfindungsgemäßen Wellenlängenumsetzers zur Wellenlängenumsetzung unpolarisierter optischer Signale, und
- Fig. 4: eine schematische Darstellung einer bevorzugten Ausführungsform eines erfindungsgemäßen Wellenlängenumsetzers zur Wellenlängenumsetzung optischer Signale mit zwei orthogonalen Polarisationszuständen.

Fig. 1 zeigt einen aus dem Stand der Technik bekannten, zur Wellenlängenumsetzung ausgebildeten 3R-Regenerator, welcher im Wesentlichen eine Anordnung aus gekoppeltem Empfänger 30 und Sender 40 darstellt. In der dargestellten Ausführung umfasst der 3R-Regenerator auf der Empfangsseite, jeweils in Reihe geschaltet, einen optischen Überlagerungsempfänger 31, einen Analog-Digital-Wandler 32, eine Einrichtung zur elektronischen Dispersionskompensation 33 und eine Einrichtung zur Rahmensynchronisation und FEC-Dekodierung 34. Auf der Sendeseite umfasst der 3R-Regenerator, jeweils in Reihe geschaltet, eine Einrichtung zur FEC-Kodierung 41, einen Digital-Analog-Wandler 42 und einen optischen Modulator 43.

In nachteiliger Weise verwendet der in Fig. 1 dargestellte Wellenlängenumsetzer verschiedene Komponenten, die einen hohen Leistungsverbrauch haben und deren Entwicklung und Herstellung relativ aufwändig ist.

In Fig. 2 ist der prinzipielle Aufbaus eines erfindungsgemäßen Wellenlängenumsetzers 50 schematisch dargestellt. Der Wellenlängenumsetzer 50 verwendet einen optischen Überlagerungsempfänger 100, der die Signale I_{R}(t) und Q_{R}(t) aus einem empfangenen optischen Signal der Mittenfrequenz f_{R} zurückgewinnt. Beide Signale, I_{R}(t) und Q_{R}(t) werden mittels einer Einrichtung zur Signalanpassung 300 an die Eingänge eines optischen Modulators 200 angepasst, wobei die Einrichtung zur Signalanpassung vorzugsweise als linearer elektrischer Mehrpol ausgebildet ist, welcher für jedes der Signale I_{R}(t) und Q_{R}(t) die Übertragungsfunktion H(f) aufweist. Der Mehrpol 300 kann vorteilhaft dazu ausgebildet sein, lineare Dispersionseffekte der Glasfasern ganz oder teilweise zu kompensieren. Vorzugsweise verändert der Mehrpol 300 mit der Übertragungsfunktion H(f) die Amplitude der Signale I_{R}(t) und Q_{R}(t), filtert Rauschen und verändert optional die Phasenbeziehungen der spektralen Anteile der elektrischen Signale I_{R}(t) und Q_{R}(t) linear, um die Funktion einer elektronischen Dispersionskompensation an der opto-elektrischen Senke nicht zu beeinträchtigen.

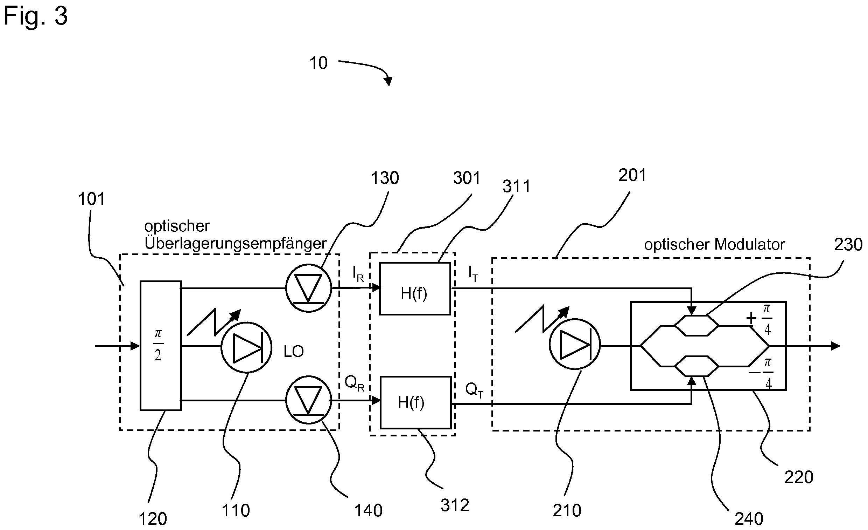

In Fig. 3 ist eine schematische Darstellung einer bevorzugten Ausführungsform eines Wellenlängenumsetzers 10 zur Wellenlängenumsetzung unpolarisierter optischer Signale dargestellt. Der Wellenlängenumsetzer 10 umfasst in dieser Ausführungsform einen handelsüblichen optischen Überlagerungsempfänger 101 und einen optischen IQ-Modulator 201. Ein am Eingang des Überlagerungsempfängers 101 anliegendes I/Q-moduliertes optisches Signal eines WDM-Kanals wird mittels einer optischen Überlagerungseinrichtung 120 in zwei optische Eingangssignale aufgeteilt, die zueinander um 90°, d.h. um π/2, phasenverschoben sind. Ein Lokaloszillator 110 erzeugt ein optisches Signal, dessen Frequenz gleich der Eingangs-Mittenfrequenz des Eingangssignals ist, welches der Überlagerungseinrichtung 120 zugeführt wird. In der Überlagerungseinrichtung 120 werden das erste der zwei optischen Eingangssignale mit dem optischen Signal des Lokaloszillators überlagert und das Überlagerungssignal der Detektordiode 130 zugeführt, und das zweite der zwei optischen Eingangssignale ebenfalls mit dem optischen Signal des Lokaloszillators überlagert und dieses Überlagerungssignal der Detektordiode 140 zugeführt. Die Detektordioden 130 und 140 erzeugen aus den optischen Überlagerungssignalen jeweils das elektrische Signal I_{R} bzw. Q_{R}. Da der Lokaloszillator 110 eine Frequenz aufweist, die der Eingangs-Mittenfrequenz entspricht, werden die Signale I_{R} und Q_{R} als Basisbandsignale erzeugt.

Die in dieser Ausführungsform des Wellenlängenumsetzers eingesetzte Anpassungseinrichtung 301 umfasst zwei Vierpole 311 und 312 mit jeweils der gleichen Übertragungsfunktion H(f) und passt die elektrischen Signale I_{R}(t) und Q_{R}(t) linear an die Eingänge des optischen Modulators 201 an und kann zusätzlich lineare Dispersionseffekte kompensieren. Die sendeseitigen Signale I_{T}(t) und Q_{T}(t), welche von der Anpassungseinrichtung 301 bereitgestellt werden, werden auf einen vom Lokaloszillator 210 erzeugten optischen Träger der Frequenz f_{T} mittels eines optischen Mischers 220 moduliert. Im dargestellten Ausführungsbeispiel wird das vom Lokaloszillator 210 erzeugte optische Signal in zwei optische Signale aufgeteilt, die zueinander um 90°, d.h. um π/2, phasenverschoben sind, von denen eines einem ersten Mach-Zehnder-Modulator 230 und das andere einem zweiten Mach-Zehnder-Modulator 240 zugeführt wird, wobei das am Eingang des optischen Modulators 201 anliegende Signal I_{T} dem ersten Mach-Zehnder-Modulator 230 und das am Eingang des optischen Modulators 201 anliegende Signal Q_{T} dem zweiten Mach-Zehnder-Modulator 240 zur Ansteuerung zugeführt wird.

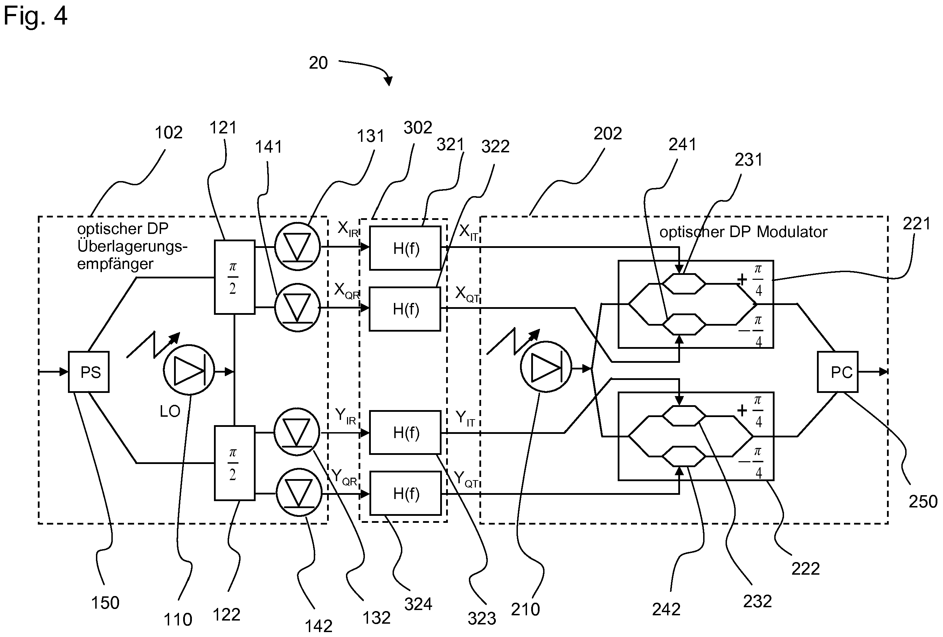

Ein Wellenlängenumsetzer wie in Fig. 3 dargestellt, kann jedoch nicht zur Wellenlängenumsetzung von optischen Signalen mit zwei orthogonalen Polarisationszuständen eingesetzt werden. Zur Wellenlängenumsetzung solcher Signale ist vorteilhaft die in Fig. 4 dargestellte Ausführungsform eines Wellenlängenumsetzers 20 vorgesehen.

Optische Signale mit zwei orthogonalen Polarisationszuständen werden zuerst in zwei optische Signale mit jeweils einem Polarisationszustand aufgeteilt. Jedes wird wie oben beschrieben bearbeitet, mit dem gleichen optischen Träger der Frequenz f_{T} gemischt und dann werden die beiden Signale mit ihren definierten Polarisationszuständen gemultiplext, um ein optisches Sendesignal mit zwei orthogonalen Polarisationszuständen zu erzeugen. Diese Prozesse bewahren die Orthogonalität der beiden Polarisationszustände. Ein Polarisationszustand muss nicht identifiziert werden, weil diese Prozesse unabhängig von einem bestimmten Polarisationsmode sind.

In der in Fig. 4 dargestellten Ausführungsform ist ein optischer Überlagerungsempfänger 102 vorgesehen, welcher ein Paar von optischen Überlagerungsempfängern umfasst, sowie ein optischer Modulator 202, welcher ein Paar von optischen Modulatoren umfasst. Es erfolgt somit eine Auftrennung in zwei Polarisationskanäle mittels eines am Eingang des optischen Überlagerungsempfängers 102 angeordneten Polarisationsfilters 150 und eines am Ausgang des optischen Modulators 202 angeordneten Polarisationsmultiplexers 250, um die Wellenlänge eines optischen Signals mit zwei orthogonalen Polarisationszuständen umzusetzen.

Die in Fig. 4 dargestellte Anordnung nutzt somit den als polarisierenden Strahlteiler ausgebildeten Polarisationsfilter 150, um das optische Empfangssignal mit der Mittenfrequenz f_{R} in zwei optische Signale mit jeweils einer Polarisationsrichtung aufzuspalten. Jedes dieser Signale wird wie oben beschrieben verarbeitet. Zu diesem Zweck sind zwei Überlagerungseinrichtungen 121 und 122 vorgesehen, welche einen gemeinsamen Lokaloszillator 110 verwenden, sowie Detektordioden 131 und 141 zum Erzeugen der elektrischen Signale X_{IR} und X_{QR} und Detektordioden 132 und 142 zum Erzeugen der elektrischen Signale Y_{IR} und Y_{QR}, wobei X_{IR} das Signal I_{R} und das Signal X_{QR} das Signal Q_{R} des ersten Polarisationszustands bezeichnet, und Y_{IR} das Signal I_{R} und das Signal Y_{QR} das Signal Q_{R} des zweiten Polarisationszustands.

Die beiden optischen Mischer 221 und 222 des optischen Modulators 202 verwenden die gleiche, vom Lokaloszillator 210 erzeugte Trägerfrequenz f_{T}, um zwei optische Signale der gleichen Mittenfrequenz f_{T} zu erzeugen, die dann mittels eines Polarisationsmultiplexers 250 zusammengeführt werden. Das Ausgangssignal des Polarisationsmultiplexers 250 ist ein optisches Signal mit zwei orthogonalen Polarisationszuständen.

Jeweils ein Paar von elektrischen I/Q-Signalen, d.h. X_{IR}, X_{QR} und Y_{IR}, Y_{QR} wird durch die Demodulation der beiden optischen Signale einer Polarisationsrichtung erzeugt. Die elektrischen Signale X_{IR}, X_{QR} entsprechen einem Polarisationszustand und die elektrischen Signale Y_{IR} und Y_{QR} entsprechen dem anderen Polarisationszustand. Jedes elektrische I/Q-Signalpaar wird mittels Anpassungseinrichtung 302, bestehend aus den Vierpolen 321, 322, 323 und 324, linear umgeformt zu X_{IT} und X_{QT}, bzw. Y_{IT} und Y_{QT}, welche dann unabhängig voneinander, aber mit der gleichen Trägerfrequenz f_{T} moduliert werden und dann polarisationsgemultiplext werden, um ein optisches Sendesignal mit zwei orthogonalen Polarisationszuständen zu erzeugen. Im einfachsten Fall umfasst die Anpassungseinrichtung 302 zwei separate Paare von Vierpolen, von denen ein Paar, umfassend die Vierpole 321 und 322, die Signale X_{IT} und X_{QT} aus den Signalen X_{IR} und X_{QR} erzeugt und das andere Paar, umfassend die Vierpole 323 und 324, die Signale Y_{IT} und Y_{QT} aus den Signalen Y_{IR} und Y_{QR} erzeugt. Die Polarisationszustände der optischen Signale werden vorzugsweise im Polarisationsmultiplexer 250 eingestellt. Alternativ könnte auch jeweils ein in Fig. 4 nicht dargestellter Polarisationssteller vor jedem der optischen Mischer 221 und 222 angeordnet sein.

Die Erfindung bietet eine energieeffiziente und komponentensparende Methode zur Wellenlängenumsetzung, die lediglich auf einer Anordnung von optischem Überlagerungsempfänger, optischem I/Q-Modulator und linearem elektrischen Mehrpol, insbesondere gebildet aus einer Mehrzahl von Vierpolen, zur Verbindung von Empfänger und Modulator besteht.

Die in den Figuren 3 und 4 dargestellten eingangs- und ausgangsseitigen Anschlüsse der Vierpole 311 und 312, sowie 321, 322, 323 und 324 sind als Eingangs- bzw. Ausgangstore der auch als Zweitore bezeichneten Vierpole ausgebildet, wobei jedes Tor durch eine symmetrische Schnittstelle mit jeweils zwei elektrischen Anschlusskontakten gebildet ist.

## Patentansprüche

1. Wellenlängenumsetzer für I/Q-quadratur-modulierte optische Signale, umfassend
- einen optischen Überlagerungsempfänger (100, 101, 102) zum Zurückgewinnen elektrischer I- und Q-Signale aus einem an einem optischen Eingang des Überlagerungsempfängers (100, 101, 102) anliegenden I/Q-quadraturmodulierten optischen Eingangssignal mit einer Eingangs-Mittenfrequenz, welcher jeweils einen elektrischen Ausgang für jedes der zurückgewonnenen I- und Q-Signale umfasst,
- einen optischen Modulator (200, 201, 202) zum Erzeugen eines I/Q-quadraturmodulierten optischen Ausgangssignals mit einer vorgebbaren Ausgangs-Mittenfrequenz aus elektrischen I- und Q-Signalen, welche an jeweiligen elektrischen Eingängen des optischen Modulators (201, 202) anliegen, und
- eine Einrichtung zur Signalanpassung (300, 301, 302), wobei
die elektrischen Ausgänge des Überlagerungsempfängers (101, 102) über die Einrichtung zur Signalanpassung (300, 301, 302) mit zugeordneten elektrischen Eingängen des optischen Modulators (200, 201, 202) verbunden sind.

2. Wellenlängenumsetzer (20) nach Anspruch 1, wobei
- der Überlagerungsempfänger (102) einen polarisierenden Strahlteiler (150) zum Aufteilen des am optischen Eingang anliegenden optischen Eingangssignals in zwei zueinander orthogonal polarisierte optische Signale umfasst, wobei der Überlagerungsempfänger (102) dazu ausgebildet ist, aus jedem der zwei polarisierten optischen Signale jeweils ein I- und Q-Signal zurückzugewinnen und an individuellen elektrischen Ausgängen bereitzustellen, und wobei
- der optische Modulator (202) einen Polarisations-Multiplexer (250) umfasst und dazu ausgebildet ist, zwei I/Q-quadraturmodulierte optische Signale mit der Ausgangs-Mittenfrequenz aus jeweils zugeordneten elektrischen I- und Q-Signalen zu erzeugen und mittels des Polarisations-Multiplexers (250) zum optischen Ausgangssignal zu kombinieren, wobei das optische Ausgangssignal zwei orthogonale Polarisationszustände umfasst.

3. Wellenlängenumsetzer nach Anspruch 1 oder 2, wobei die Einrichtung zur Signalanpassung wenigstens einen linearen elektrischen Vierpol (301) umfasst.

4. Wellenlängenumsetzer nach einem der vorstehenden Ansprüche, wobei die Einrichtung zur Signalanpassung
- wenigstens eine Einrichtung zur Änderung der Amplitude der eingangsseitig zugeführten I- und Q-Signale,
- wenigstens einen Rauschfilter für die I- und Q-Signale, und/oder
- eine Einrichtung zur linearen Änderung der Phasenbeziehung der spektralen Anteile der I- und Q-Signale umfasst.

5. Wellenlängenumsetzer nach einem der vorstehenden Ansprüche, wobei der Überlagerungsempfänger einen Lokaloszillator mit einer mit der Eingangs-Mittenfrequenz übereinstimmenden Frequenz umfasst, und wobei die I- und Q-Signale an den jeweiligen Ausgängen des Überlagerungsempfängers als Basisbandsignale bereitgestellt werden.

6. Wellenlängenumsetzer nach einem der vorstehenden Ansprüche, wobei Eingangs- und Ausgangs-Mittenfrequenz unterschiedlich sind.

7. Verfahren zur Wellenlängenumsetzung, umfassend die Schritte:
- Empfangen eines I/Q-quadraturmodulierten optischen Eingangssignals mit einer Eingangs-Mittenfrequenz und Zurückgewinnen elektrischer I- und Q-Signale aus dem empfangenen optischen Signal mittels eines Überlagerungsempfängers (101, 102),
- Durchführen einer Signalanpassung der zurückgewonnenen elektrischen I- und Q-Signale und Zuführen der angepassten I- und Q-Signale einem optischen Modulator (201, 202),
- Erzeugen eines I/Q-quadraturmodulierten optischen Ausgangssignals mit einer vorgegebenen Ausgangs-Mittenfrequenz durch den optischen Modulator (201, 202) aus den zugeführten elektrischen I- und Q-Signalen.

8. Verfahren nach Anspruch 7, wobei
- das Zurückgewinnen elektrischer I- und Q-Signale ein Aufteilen des empfangenen optischen Eingangssignals in zwei zueinander orthogonal polarisierte optische Signale und Zurückgewinnen jeweils eines I- und Q-Signals aus jedem der zwei polarisierten optischen Signale umfasst, und wobei
- das Erzeugen des I/Q-quadraturmodulierten optischen Ausgangssignals das Erzeugen zweier I/Qquadraturmodulierter optischer Signale mit der Ausgangs-Mittenfrequenz aus jeweils zugeordneten elektrischen I- und Q-Signalen und Kombinieren der zwei erzeugten optischen Signale zum optischen Ausgangssignal mittels eines Polarisations-Multiplexers (250) umfasst, wobei das optische Ausgangssignal zwei orthogonale Polarisationszustände umfasst.

9. Verfahren nach Anspruch 7, wobei die Signalanpassung mittels zweier linearer elektrischer Vierpole (311 und 312) erfolgt, welche die gleiche Übertragungsfunktion aufweisen.

10. Verfahren nach Anspruch 8, wobei die Signalanpassung mittels vierer linearer elektrischer Vierpole (321, 322, 323, 324) erfolgt, welche die gleiche Übertragungsfunktion aufweisen.

11. Verfahren nach einem der vorstehenden Ansprüche, wobei das Durchführen einer Signalanpassung der zurückgewonnenen elektrischen I- und Q-Signale
- eine Änderung der Amplitude der zurückgewonnenen elektrischen I- und/oder Q-Signale,
- ein Filtern von Rauschen in wenigstens der zurückgewonnenen elektrischen I- und Q-Signale, und/oder
- eine lineare Änderung der Phasenbeziehung der spektralen Anteile der zurückgewonnenen elektrischen I- und Q-Signale umfasst.

12. Verfahren nach einem der vorstehenden Ansprüche, wobei der Überlagerungsempfänger einen Lokaloszillator mit einer mit der Eingangs-Mittenfrequenz übereinstimmenden Frequenz umfasst, und wobei die I- und Q-Signale als Basisbandsignale zurückgewonnen werden.

13. Verfahren nach einem der vorstehenden Ansprüche, wobei die Ausgangs-Mittenfrequenz in Abhängigkeit einer Belegung von Wellenlängenkanälen wenigstens einer optischen Übertragungsstrecke eines im Wellenlängen-Multiplexbetrieb betriebenen optischen Übertragungsnetzes ausgewählt wird.

14. Netzelement zum Einsatz in einem im Wellenlängen-Multiplexbetrieb betriebenen optischen Übertragungsnetz, umfassend wenigstens einen Wellenlängenkonverter gemäß einem der Ansprüche 1 bis 6.

## Claims

1. A wavelength converter for I/Q quadrature modulated optical signals, comprising
- an optical superheterodyne receiver (100, 101, 102) for recovering electrical I and Q signals from an I/Q quadrature modulated optical input signal having an input centre frequency and being applied to an optical input of the superheterodyne receiver (100, 101, 102) which has a respective electrical output for each of the recovered I and Q signals;
- an optical modulator (200, 201, 202) for generating an I/Q quadrature modulated optical output signal having a predefinable output centre frequency from electrical I and Q signals which are applied to respective electrical inputs of the optical modulator (201, 202); and
- a device for signal adaptation (300, 301, 302);
wherein
the electrical outputs of the superheterodyne receiver (101, 102) are connected to associated electrical inputs of the optical modulator (200, 201, 202) via the signal adaptation device (300, 301, 302).

2. The wavelength converter (20) according to claim 1,
wherein
- the superheterodyne receiver (102) comprises a polarizing beam splitter (150) for splitting the optical input signal applied to the optical input into two mutually orthogonally polarized optical signals, wherein the superheterodyne receiver (102) is adapted to recover a respective I and Q signal from each of the two polarized optical signals and to provide them at individual electrical outputs; and wherein
- the optical modulator (202) comprises a polarization multiplexer (250) and is adapted to generate two I/Q quadrature modulated optical signals with the output centre frequency from respectively associated electrical I and Q signals and to combine them into the optical output signal using the polarization multiplexer (250), wherein the optical output signal comprises two orthogonal polarization states.

3. The wavelength converter according to claim 1 or 2,
wherein the device for signal adaptation comprises at least one linear electric quadrupole (301).

4. The wavelength converter according to any one of the preceding claims, wherein the device for signal adaptation comprises
- at least one means for changing the amplitude of the I and Q signals applied at the input side;
- at least one noise filter for the I and Q signals; and/or
- means for linear changing the phase relationship of the spectral components of the I and Q signals.

5. The wavelength converter according to any one of the preceding claims, wherein the superheterodyne receiver comprises a local oscillator having a frequency that matches the input centre frequency, and wherein the I and Q signals are provided as baseband signals at the respective outputs of the superheterodyne receiver.

6. The wavelength converter according to any one of the preceding claims, wherein the input and output centre frequencies are different.

7. A method for wavelength conversion, comprising the steps of:
- receiving an I/Q quadrature modulated optical input signal having an input centre frequency, and recovering electrical I and Q signals from the received optical signal using a superheterodyne receiver (101, 102);
- performing a signal adaptation of the recovered electrical I and Q signals and supplying the adapted I and Q signals to an optical modulator (201, 202);
- generating, by the optical modulator (201, 202), an I/Q quadrature modulated optical output signal that has a predefined output centre frequency from the supplied electrical I and Q signals.

8. The method according to claim 7, wherein
- the recovering of electrical I and Q signals comprises splitting the received optical input signal into two mutually orthogonally polarized optical signals and recovering a respective I and Q signal from each of the two polarized optical signals; and wherein
- the generating of the I/Q quadrature modulated optical output signal comprises generating two I/Q quadrature modulated optical signals at the output centre frequency from respectively associated electrical I and Q signals and combining the two generated optical signals into the optical output signal using a polarization multiplexer (250), wherein the optical output signal comprises two orthogonal polarization states.

9. The method according to claim 7, wherein the signal adaptation is performed using two linear electric quadrupoles (311 and 312) which have the same transfer function.

10. The method according to claim 8, wherein the signal adaptation is performed using four linear electric quadrupoles (321, 322, 323, 324) which have the same transfer function.

11. The method according to any one of the preceding claims, wherein the performing of a signal adaptation of the recovered electrical I and Q signals comprises
- a change in the amplitude of the recovered electrical I and/or Q signals;
- a filtering of noise in at least the recovered electrical I and Q signals; and/or
- a linear change in the phase relationship of the spectral components of the recovered electrical I and Q signals.

12. The method according to any one of the preceding claims, wherein the superheterodyne receiver comprises a local oscillator having a frequency that matches the input centre frequency, and wherein the I and Q signals are recovered as baseband signals.

13. The method according to any one of the preceding claims, wherein the output centre frequency is selected in dependence of an occupancy of wavelength channels of at least one optical transmission path of a wavelength division multiplex operated optical transmission network.

14. A network element for use in a wavelength division multiplex operated optical transmission network, comprising at least one wavelength converter according to any one of claims 1 to 6.

## Revendications

1. Convertisseur de longueur d'onde pour signaux optiques modulés en quadrature I/Q, comprenant :
- un récepteur hétérodyne optique (100, 101, 102) destiné à récupérer les signaux électriques I et Q d'un signal d'entrée optique présentant une fréquence moyenne d'entrée et modulé en quadrature I/Q s'appliquant contre une entrée optique du récepteur hétérodyne (100, 102, 102), lequel comprend respectivement une sortie électrique pour chacun des signaux I et Q récupérés,
- un modulateur optique (200, 201, 202) destiné à produire un signal de sortie optique modulé en quadrature I/Q et présentant une fréquence moyenne de sortie pouvant être prédéfinie à partir des signaux électriques I et Q, lesquels s'appliquent contre des entrées électriques respectives du modulateur optique (201, 202), et
- un dispositif d'adaptation de signal (300, 301, 302),
les sorties électriques du récepteur hétérodyne (101, 102) étant reliées par le dispositif d'adaptation de signal (300, 301, 302) aux entrées électriques associées du modulateur optique (200, 201, 202).

2. Convertisseur de longueur d'onde (20) selon la revendication 1, dans lequel :
- le récepteur hétérodyne (102) comprend un séparateur de faisceau polarisant (150) destiné à séparer le signal d'entrée optique s'appliquant contre l'entrée optique en deux signaux optiques polarisés perpendiculairement l'un à l'autre, le récepteur hétérodyne (102) étant conçu pour récupérer à partir de chacun des deux signaux optiques polarisés respectivement un signal I et Q et pour les fournir à des sorties électriques individuelles, et
dans lequel
- le modulateur optique (202) comprend un multiplexeur de polarisation (250) et est conçu pour produire deux signaux optiques modulés en quadrature I/Q présentant la fréquence moyenne de sortie à partir des signaux électriques I et Q respectivement associés et pour les combiner au moyen du multiplexeur de polarisation (250) en signal de sortie optique, le signal de sortie optique comprenant deux états de polarisation perpendiculaires.

3. Convertisseur de longueur d'onde selon la revendication 1 ou 2, dans lequel le dispositif d'adaptation de signal comprend au moins un quadripôle électrique linéaire (301).

4. Convertisseur de longueur d'onde selon l'une quelconque des revendications précédentes, dans lequel le dispositif d'adaptation de signal comprend :
- au moins un dispositif de modification de l'amplitude des signaux I et Q amenés côté entrée,
- au moins un filtre antiparasites pour les signaux I et Q, et/ou
- un dispositif de modification linéaire de la relation de phase des composantes spectrales des signaux I et Q.

5. Convertisseur de longueur d'onde selon l'une quelconque des revendications précédentes, dans lequel le récepteur hétérodyne comprend un oscillateur local présentant une fréquence coïncidant avec la fréquence moyenne d'entrée, et dans lequel les signaux I et Q sont fournis en tant que signaux de bande de base aux sorties respectives du récepteur hétérodyne.

6. Convertisseur de longueur d'onde selon l'une quelconque des revendications précédentes, dans lequel les fréquences moyenne d'entrée et de sortie sont différentes.

7. Procédé de conversion de longueur d'onde, comprenant les étapes suivantes :
- recevoir un signal d'entrée optique modulé en quadrature I/Q présentant une fréquence moyenne d'entrée et récupérer les signaux électriques I et Q à partir du signal optique reçu au moyen d'un récepteur hétérodyne (101, 102),
- réaliser une adaptation de signal des signaux électriques I et Q récupérés et amener les signaux I et Q adaptés à un modulateur optique (201, 202),
- produire un signal de sortie optique modulé en quadrature I/Q présentant une fréquence moyenne de sortie prédéfinie au moyen du modulateur optique (201, 202) à partir des signaux électriques I et Q amenés.

8. Procédé selon la revendication 7, dans lequel :
- la récupération des signaux électriques I et Q comprend la séparation du signal d'entrée optique reçu en deux signaux optiques polarisés perpendiculairement l'un à l'autre et la récupération respectivement d'un signal I et Q à partir de chacun des deux signaux optiques polarisés, et dans lequel
- la production du signal de sortie optique modulé en quadrature I/Q comprend la production de deux signaux optiques modulés en quadrature I/Q présentant la fréquence moyenne de sortie à partir de signaux électriques I et Q respectivement associés et la combinaison des deux signaux optiques produits en signal de sortie optique au moyen d'un multiplexeur de polarisation (250), le signal de sortie optique comprenant deux états de polarisation perpendiculaires.

9. Procédé selon la revendication 7, dans lequel l'adaptation de signal est réalisée au moyen de deux quadripôles électriques linéaires (311 et 312), lesquels présentent la même fonction de transmission.

10. Procédé selon la revendication 8, dans lequel l'adaptation de signal est réalisée au moyen de quatre quadripôles électriques linéaires (321, 322, 323, 324), lesquels présentent la même fonction de transmission.

11. Procédé selon l'une quelconque des revendications précédentes, dans lequel la réalisation d'une adaptation de signal des signaux électriques I et Q récupérés comprend :
- une modification de l'amplitude des signaux électriques I et Q récupérés,
- un filtrage des parasites dans au moins les signaux électriques I et Q récupérés, et/ou
- une modification linéaire de la relation de phase des composantes spectrales des signaux électriques I et Q récupérés.

12. Procédé selon l'une quelconque des revendications précédentes, dans lequel le récepteur hétérodyne comprend un oscillateur local présentant une fréquence coïncidant avec la fréquence moyenne d'entrée, et dans lequel les signaux I et Q sont récupérés en tant que signaux de bande de base.

13. Procédé selon l'une quelconque des revendications précédentes, dans lequel la fréquence moyenne de sortie est sélectionnée en fonction d'une occupation de canaux de longueur d'onde d'au moins un trajet de transmission optique d'un réseau de transmission optique fonctionnant en mode multiplexage en longueur d'onde.

14. Elément de réseau destiné à être utilisé dans un réseau de transmission optique fonctionnant en mode multiplexage en longueur d'onde, comprenant au moins un convertisseur de longueur d'onde selon l'une quelconque des revendications 1 à 6.
